# EUROPEAN PATENT SPECIFICATION

(11) **EP 0 443 554 B1**
(45) Date of publication and mention of the grant of the patent: **28.08.1996**
(21) Application number: 91102467.7
(22) Date of filing: 20.02.1991
(51) Int. Cl.: H04N 1/32, H04N 1/21

(54) **A facsimile apparatus**
Faksimilegerät
Appareil de fac-similé

(30) Priority: 20.02.1990 JP 40365/90
(43) Date of publication of application: 28.08.1991
(73) Proprietor: SHARP KABUSHIKI KAISHA, Osaka 545 (JP)
(72) Inventor: Ohbatake, Masami, Higashihiroshima-shi,Hiroshima-ken (JP)
(74) Representative: TER MEER - MÜLLER - STEINMEISTER & PARTNER

(56) References cited:
- EP-A- 0 105 642
- EP-A- 0 337 772
- FR-A- 2 561 842
- US-A- 4 876 604
- PATENT ABSTRACTS OF JAPAN vol. 9, no. 227 (P-388)13 September 1985 &JP-A-60 085 470
- PATENT ABSTRACTS OF JAPAN vol. 13, no. 463 (E-833)19 October 1989 & JP-A-1 181 373
- PATENT ABSTRACTS OF JAPAN vol. 11, no. 70 (E-485)3 March 1987 & JP-A61 225 965

## Description

### 1. Field of the Invention:

The present invention relates to a facsimile apparatus capable of recording received image data on a tape and reproducing the image data recorded on the tape for printing.

### 2. Description of the Prior Art:

Most facsimile apparatus are provided with a semiconductor memory for temporarily storing transmitting image data or received image data, as disclosed by EP-A-0 337 772, for example.

It is usual in personal computers, word processors or the like to record image data and/or character data in a semiconductor memory and display or print the recorded contents as necessary. If a facsimile apparatus is equipped with such a memory storing image data in addition to its original memory, prerecording may be made in that memory so that its contents can be displayed or printed as necessary, and therefore it is possible to provide a new output device to replace a printer or display used with personal computers and word processors. For example, when image data such as the operation and maintenance instructions for a facsimile apparatus is recorded in a semiconductor memory mounted in the facsimile apparatus, such advantages are offered that there is no need to separately provide an instruction manual for the facsimile apparatus and that it is not necessary to carry actual materials such as drawings, etc.

However, with prior art facsimile apparatus, since a semiconductor memory mounted therein has a limited recording capacity and cannot be readily detached for replacement, it is only possible to output received image data and it is not possible to output image data which have been recorded by another apparatus such as a personal computer, or word processor.

Patent Abstract of Japan vol. 9, no. 227, (P-388), 13 September 1985 & JP-A-60 085 470 discloses a PCM processor having digital interface circuits which enable utilization of a video tape recorder as a memory device in connection with a facsimile apparatus; a telex, etc..

Some Japanese Laid-Open Patent Publications JP-A-61198,853, JP-A-61242,449, JP-A-1254,065 and JP-A-1270452 teach the use of a tape for recording image data which have been transmitted from another facsimile apparatus. However, the apparatus of these publications cannot record the image data read from an original on a tape, at any desired time.

### SUMMAY OF THE INVENTION

The facsimile apparatus of this invention, which overcomes the above-discussed and numerous other disadvantages and deficiencies of the prior art, comprises the features of appended claim 1.

Preferably, said communication unit may further include means for depressing image data.

Preferably, said communication unit may further include means for expanding image data.

The facsimile apparatus of the invention comprises: a reading unit; a printing unit; and a communication unit which is to be connected between a communication line and said reading and printing units, said communication unit including modulating and demodulating means for processing image data, and said apparatus further comprises: a tape recording and reproducing unit; digital/analog converting means connected between said communication unit and said tape recording and reproducing unit; analog/digital converting means connected between said communication unit and said tape recording and reproducing unit; and an image data input port for receiving image data from another apparatus, said image data input port coupled to said communication unit.

Preferably, said apparatus may further comprise switching means for selectively connecting said communication unit with one of said reading unit and image data input port.

Preferably, said communication unit may further include means for depressing image data.

Preferably, said communication unit may further include means for expanding image data.

Thus, the invention described herein makes possible the objectives of:
(1) providing a facsimile apparatus which can record image data on a tape at any desired time;
(2) providing a facsimile apparatus which can record image data produced by a reading unit, on a tape at any desired time;
(3) providing a facsimile apparatus which can output image data at any desired time which have been produced by a reading unit and recorded on a tape;
(4) providing a facsimile apparatus which can record image data which have been produced by another apparatus, on a tape at any desired time;
(5) providing a facsimile apparatus which can output image data at any desired time which have been recorded by another apparatus and recorded on a tape; and
(6) providing an apparatus which can record image data on a tape which have produced by an image processing apparatus such as a facsimile apparatus, or personal computer.

### BRIEF DESCRIPTION OF THE DRAWINGS

This invention may be better understood and its numerous objects and advantages will become apparent to those skilled in the art by reference to the accompanying drawings as follows:
Figure 1 is a block diagram illustrating a facsimile apparatus according to the invention.
Figure 2 is a block diagram illustrating another embodiment of the invention.

### DESCRIPTION OF THE PREFERRED EMBODIMENTS

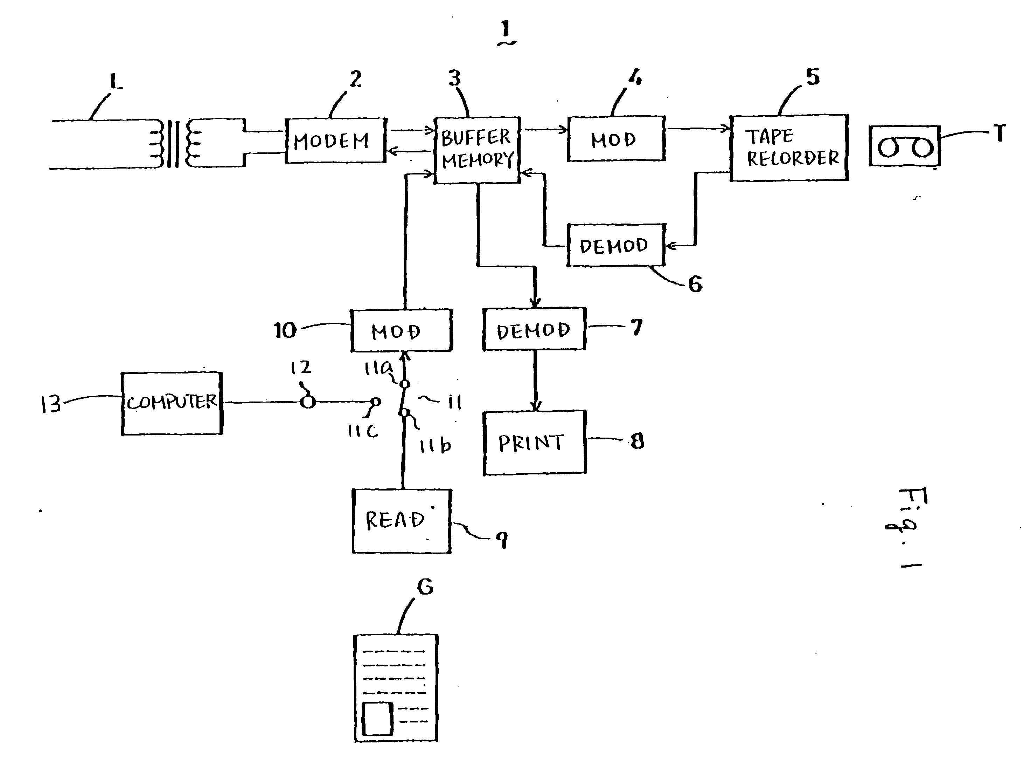

Figure 1 shows one embodiment of the invention. The facsimile apparatus **1** shown in Figure 1 comprises a modem **2** connected to a communication line L, a buffer memory **3**, a modulating circuit 10, a demodulating circuit **7**, a printing unit **8** connected to the demodulating circuit **7**, a reading unit **9** connected to the modulating circuit **10** through a switch **11**, and an input terminal **12**. The switch **11** has a common terminal **11a** connected to the input of the modulating circuit **10**, and terminals **11b** and **11c** which are connected to the reading unit **9** and the input terminal **12**, respectively. An output of another apparatus **13** for processing image data such as a personal computer and word processor can be coupled to the input terminal **12**. The common terminal **11a** is normally connected to the terminal **11b** as shown in Figure 1 so that the reading unit **9** is connected to the modulating circuit **10**, and, when a selection key (not shown) disposed on the apparatus 1 is operated, the common terminal **11a** is connected to the terminal **11c**, thereby connecting the personal computer **13** to the modulating circuit **10**. The modulating circuit **10** and demodulating circuit **7** are coupled to the buffer memory 3. The modulating circuit **10** includes circuitry for the MH (Modified Huffman) or MR (Modified Read) coding system to be provided with a function of data compression.

The facsimile apparatus **1** further comprises, a modulating circuit **4**, a demodulating circuit **6**, and a tape recording/reproducing unit **5** which is coupled to the buffer memory **3** through the modulating circuit **4** and demodulating circuit **6**. A so-called microcassette tape or compact cassette tape T can be loaded into the tape recording/reproducing unit **5**.

The facsimile apparatus **1** having the above-described construction can perform various functions. Examples of these functions are as follows:
(A) to record image data transmitted from another facsimile apparatus;
(B) to reproduce an image from image data transmitted from another facsimile apparatus;
(C) to record image data of an image of an original;
(D) to reproduce an image of an original;
(E) to transmit image data of an image of an original to another facsimile apparatus;
(F) to record image data which have been produced by another image processing apparatus;
(G) to reproduce an image from image data which have been produced by another image processing apparatus; and
(H) to transmit image data which have been produced by another image processing apparatus.

These functions (A) - (H) of the facsimile apparatus 1 will be described.

### (A) To record image data transmitted from another facsimile apparatus

When receiving image data from another facsimile apparatus through the communication line L, the image data are converted by the modem **2** to digital image signals which are then supplied to the modulating circuit **4** through the buffer memory **3**. In the modulating circuit **4**, the digital image signals undergo band compression, and are converted back to analog image signals. Thereafter, the analog image signals are supplied to the tape recording/reproducing unit **5** by which the analog image signals are recorded on the tape **T**. In this way, image data received by the facsimile apparatus 1 are once recorded on the tape **T**. Therefore, the image data transmitted from the other facsimile apparatus can be reproduced at any desired time as described below.

### (B) To reproduce an image from image data transmitted from another facsimile apparatus

Image data which have been transmitted from another facsimile apparatus and recorded on the tape **T** in the form of analog signals (as described in above (A)) are reproduced from the tape **T** by the tape recording/reproducing unit **5**, and the reproduced analog signals are input to the demodulating circuit **6** by which the analog image signals are converted to digital signals. The digital signals are supplied via the buffer memory **3** to the demodulating circuit **7** by which the digital signals are expanded. The digital signals are decomposed into individual bits which are then transferred to the printing unit **8**. The image represented by the individual bits is printed on recording paper (not shown) by the printing unit **8**.

### (C) To record image data of an image of an original

An image of an original **G** is read by the reading unit **9** to be converted to digital image signals. The digital image signals are transferred to the modulating circuit **10** through a switch **11** in which the common contact lla is normally connected to the contact 11b as described above. Then, the digital image signals are compressed by the modulating circuit **10**. The compressed digital image signals are supplied to the modulating circuit **4** through the buffer memory **3**. In the modulating circuit **4**, the digital image signals undergo band compression, and are converted to analog image signals. Then, the analog image signals are supplied to the tape recording/reproducing unit **5** by which the analog image signals are recorded on the tape **T**.

### (D) To reproduce an image of an original

Image data which have been read from the original **G** by the reading unit **9** and recorded on the tape **T** are reproduced from the tape **T** by the tape recording/reproducing unit **5**. The reproduced analog signals are input to the demodulating circuit **6** by which the analog image signals are converted to digital signals. The digital signals are supplied via the buffer memory **3** to the demodulating circuit **7** by which the digital signals are expanded. The digital signals are decomposed into individual bits which are then transferred to the printing unit **8**. The image represented by the individual bits is printed on recording paper by the printing unit **8**.

### (E) To transmit image data of an image of an original to another facsimile apparatus

Image data which have been read from the original **G** by the reading unit **9** and recorded on the tape **T** are reproduced from the tape **T** by the tape recording/reproducing unit **5**. The reproduced analog signals are input to the demodulating circuit **6** by which the analog image signals are converted to digital signals. The digital signals are supplied to the modem **2** through the buffer memory **3**, and converted to analog signals. The analog signals are transmitted to the destination facsimile apparatus via the communication line **L**.

### (F) To record image data which have been produced by another image processing apparatus

The embodiment can record image data which have been produced by another image processing apparatus such as a personal computer, on the tape **T**. To perform this operation, an output of a personal computer **13** in which digital image data have been produced and stored in a memory is coupled to the input terminal **12**. Then. the above-mentioned selection key (not shown) is operated so that the common terminal **11a** of the switch **11** is connected to the terminal **11c** coupled to the input terminal **12**. The image data are transferred as digital signals from the personal computer **13** to the modulating circuit **10** through the input terminal **12** and switch **11**. Then, the digital image signals are compressed by the modulating circuit **10**. The compressed digital image signals are supplied to the modulating circuit **4** through the buffer memory **3**. In the modulating circuit **4**, the digital image signals undergo band compression, and are converted to analog image signals. Then, the analog image signals are supplied to the tape recording/reproducing unit **5** by which the analog image signals are recorded on the tape **T**. After transferring the digital image data from the personal computer **13** to the modulating circuit **10**, the switch **11** is returned to the normal state (i.e., common terminal **11a** is connected to the terminal **11b**).

### (G) To reproduce an image from image data which have been produced by another image processing apparatus

Image data which have been produced by the personal computer **13** and recorded on the tape **T** are reproduced from the tape **T** by the tape recording/reproducing unit **5**. The reprcduced analog signals are input to the demodulating circuit **6** by which the analog image signals are converted to digital signals. The digital signals are supplied via the buffer memory **3** to the demodulating circuit **7** by which the digital signals are expanded. The digital signals are decomposed into individual bits which are then transferred to the printing unit **8**. The image represented by the individual bits is printed on recording paper by the printing unit **8**.

### (H) To transmit image data which have been produced by another image processing apparatus

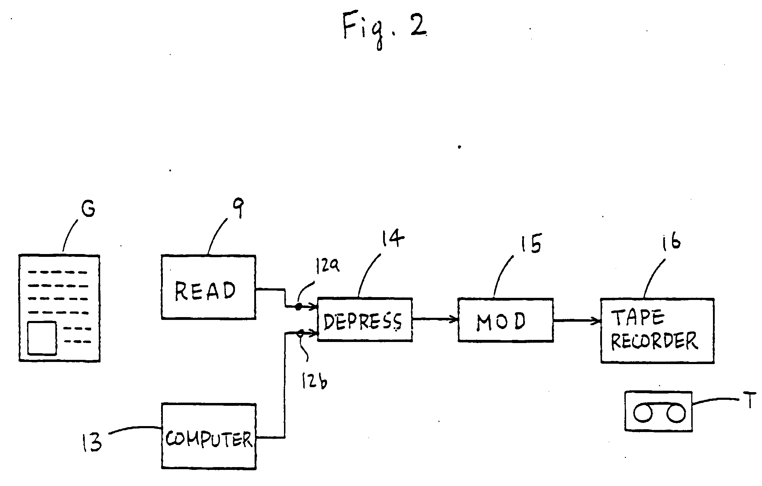

Image data which have been produced by the personal computer **13** and recorded on the tape **T** are reproduced from the tape **T** by the tape recording/reproducing unit **5**. The reproduced analog signals are input to the demodulating circuit **6** by which the analog image signals are converted to digital signals. The digital signals are supplied to the modem **2** through the buffer memory **3**, and converted to analog signals. The analog signals are transmitted to the destination facsimile apparatus via the communication line **L**. The tape **T** may be the one on which image data have been recorded by the apparatus of Figure **2** (which will be described later).

In this way, the facsimile apparatus **1** can print images which have been produced by another apparatus, on recording paper and at any desired time. If images for illustrating the manner of operating the facsimile apparatus is prerecorded on a tape, it is possible to demonstrate the operation of the apparatus while sequentially printing the images on recording paper.

Figure 2 illustrates another apparatus according to the invention. The apparatus shown in Figure 2 can record image data on a tape **T** which have been produced by a reading unit **9** of a facsimile apparatus or by a personal computer **13**. The apparatus shown in Figure 2 comprises two input terminals **12a** and **12b** to which the reading unit **9** and personal computer **13** can be connected respectively, a compression circuit **14**, a modulating circuit **15**, and a tape recording unit **16** into which a microcassetter tape **T** can be loaded. The compression circuit **14** has similar functions as those of the modulating circuit **10** in the apparatus of Figure 1, and namely includes circuitry for the MH (Modified Huffman) or MR (Modified Read) coding system to be provided with a function of data compression.

When image data of an image of an original **G** are to be recorded on the tape **T**. An image of the original **G** is read by the reading unit **9** of a facsimile apparatus (or by a image scanner), and converted to digital image signals. The digital image signals are temporarily stored in a suitable memory of the facsimile apparatus. The output of the facsimile apparatus is coupled to the input terminal **12a**, and thereafter the digital image signals are transferred to the compression circuit **14** through the input terminal **12a**. Then, the digital image signals are compressed by the compression circuit **14**. The compressed digital image signals are supplied to the modulating circuit **15**. In the modulating circuit **15**, the digital image signals are converted to analog image signals. The analog image signals are supplied to the tape recording unit **16** by which the analog image signals are recorded on the tape **T**. The tape **T** on which image data to be reproduced are recorded can be loaded into the tape recording/reproducing unit **5** of the facsimile apparatus of Figure 1, and reproduced in the manner described in above (G). When image data produced by the personal computer **13** are to be recorded on the tape **T**, the output of the computer **13** is coupled to the other input terminal **12b**, and the same procedures described above are performed.

In this way, according to the apparatus of Figure 2, image data produced by an image processing apparatus can be recorded on a tape, and can be easily reproduced at any desired time by using a facsimile apparatus having the structure described with reference to Figure 1.

## Claims

1. A facsimile apparatus, comprising:
a reading unit (9) for reading an original (G);
a printing unit (8);
a buffer memory (3);
a picture memory;
a communication unit which is to be connected between a communication line (L) and said reading and printing units, said communication unit including
- coding means (10) for encoding image data received from said reading unit into digital facsimile signals,
- decoding means (7) for decoding digital facsimile signals and for transmitting the decoded digital facsimile signals to said printing unit,
- a MODEM (2) for providing communications via said communication line between said facsimile apparatus and an external apparatus by way of modulating said digital facsimile signals and demodulating image data received from said external apparatus,
**characterized by**
an image data input port (12) for receiving image data from another apparatus, said image data input port (12) being coupled to said communication unit;
a switch means (11) for selectively connecting said communication unit with one of said reading unit (9) and said image data input port (12);
said picture memory being a tape recording and reproducing unit (5);
digital/analog converting means (4) connected between said communication unit and said tape recording and reproducing unit (5) for receiving and converting digital image signals from said communication unit into analog image signals;
analog/digital converting means (6) connected between said tape recording and reproducing unit (5) and said communication unit for receiving and converting analog image signals from said tape recording and reproducing unit (5) into digital image signals;
wherein said image data from said reading unit (9) and said MODEM (2) and said image data input port (12) may be stored in said tape recording and reproducing unit (5);
and wherein analog image signals stored in said tape recording and reproducing unit (5) may be selectively transmitted to said printing unit (8) and said MODEM (2).

2. A facsimile apparatus according to claim 1, wherein said image data input port (12) being connectable to said coding means (10) for encoding image data received from said image data input port (12) into digital facsimile signals.

3. A facsimile apparatus according to any of the preceding claims, wherein said communication unit further includes means (14) for compressing image data.

4. A facsimile apparatus according to claim 3, wherein said communication unit further includes means for expanding image data.

## Patentansprüche

1. Faksimilegerät mit:
einer Leseeinheit (9) zum Lesen eines Originals (G);
einer Druckeinheit (8);
einem Pufferspeicher (3);
einem Bildspeicher;
einer Nachrichtenübertragungseinheit, die zwischen eine Fernmeldeleitung (L) und die Lese- und Druckeinheit zu schalten ist, wobei die Nachrichtenübertragungseinheit enthält:
- Kodiermittel (10) zum Kodieren von von der Leseeinheit empfangenen Bilddaten in digitale Faksimilesignale,
- Dekodiermittel (7) zum Dekodieren digitaler Faksimilesignale und zum Weiterleiten der dekodierten digitalen Faksimilesignale an die Druckeinheit,
- ein MODEM (2) zum Ermöglichen von Nachrichtenübertragungen zwischen dem Faksimilegerät und einem externen Gerät über die Fernmeldeleitung durch Modulieren der digitalen Faksimilesignale und Demodulieren von vom externen Gerät empfangenen Bilddaten,
**gekennzeichnet durch** einen Bilddateneingangsanschluß (12) zum Empfangen von Bilddaten von einem anderen Gerät, wobei dieser Bilddateneingangsanschluß (12) an die Nachrichtenübertragungseinheit angeschlossen ist;
einen Schalter (11) zum selektiven Verbinden der Nachrichtenübertragungseinheit mit entweder der Leseeinheit (9) oder dem Bilddateneingangsanschluß (12);
den Bildspeicher, der eine Bandaufnahme- und -wiedergabeeinheit (5) ist;
einen D/A-Wandler (4), der zwischen die Nachrichtenübertragungseinheit und die Bandaufnahme- und -wiedergabeeinheit geschaltet ist, zum Empfangen und Umwandeln digitaler Bildsignale von der Nachrichtenübertragungseinheit in analoge Bildsignale;
einen A/D-Wandler (6), der zwischen die Bandaufnahme- und -wiedergabeeinheit (5) und die Nachrichtenübertragungseinheit geschaltet ist, zum Empfangen und Umwandeln analoger Bildsignale von der Bandaufnahme- und -wiedergabeeinheit (5) in digitale Bildsignale;
wobei die Bilddaten von der Leseeinheit (9) und dem MODEM (2) und dem Bilddateneingangsanschluß (12) in der Bandaufnahme- und -wiedergabeeinheit (5) gespeichert werden können;
und wobei in der Bandaufnahme- und -wiedergabeeinheit (5) gespeicherte analoge Bildsignale selektiv an die Druckeinheit (8) und das MODEM (2) weitergeleitet werden können.

2. Faksimilegerät nach Anspruch 1, bei dem der Bilddateneingangsanschluß (12) an die Kodiermittel (10) zum Kodieren von vom Bilddateneingangsanschluß (12) empfangenen Bilddaten in digitale Faksimilesignale anschließbar ist.

3. Faksimilegerät nach einem der vorangehenden Ansprüche, bei dem die Nachrichtenübertragungseinheit ferner Mittel (14) zum Komprimieren von Bilddaten enthält.

4. Faksimilegerät nach Anspruch 3, bei dem die Nachrichtenübertragungseinheit ferner Mittel zum Expandieren von Bilddaten enthält.

## Revendications

1. Appareil de télécopie comportant:
une unité de lecture (9) pour lire un original (G);
une unité d'impression (8);
une mémoire tampon (3);
une mémoire d'image;
une unité de communication prévue pour être connectée entre une ligne de communication (L) et lesdites unités de lecture et d'impression, ladite unité de communication comprenant:
- un moyen de codage (10) pour coder en signaux numériques de télécopie des données d'image reçues de ladite unité de lecture,
- un moyen de décodage (7) pour décoder des signaux numériques de télécopie et pour transmettre les signaux numériques de télécopie décodés à ladite unité d'impression,
- un MODEM (2) pour assurer, par l'intermédiaire de la ligne de communication, les communications entre ledit appareil de télécopie et un appareil extérieur en modulant lesdits signaux numériques de télécopie et en démodulant des données d'image reçues dudit appareil extérieur,
caractérisé par
un port d'entrée de données d'image (12) pour recevoir des données d'image provenant d'un autre appareil, ledit port d'entrée de données d'image (12) étant connecté à ladite unité de communication;
un moyen de commutation (11) pour connecter sélectivement ladite unité de communication soit à ladite unité de lecture (9) soit audit port d'entrée de données d'image (12);
ladite mémoire d'image étant une unité d'enregistrement et de reproduction à bande magnétique (5);
un moyen de conversion numérique / analogique (4) connecté entre ladite unité de communication et ladite unité d'enregistrement et de reproduction à bande magnétique (5) pour recevoir et convertir en signaux analogiques d'image des signaux numériques d'image provenant de ladite unité de communication;
un moyen de conversion analogique / numérique (6) connecté entre ladite unité d'enregistrement et de reproduction à bande magnétique (5) et ladite unité de communication pour recevoir et convertir en signaux numériques d'image des signaux analogiques d'image provenant de ladite unité d'enregistrement et de reproduction à bande magnétique (5);
dans lequel lesdites données d'image provenant de ladite unité de lecture (9), dudit MODEM (2) et dudit port d'entrée de données d'image (12) peuvent être mémorisées dans ladite unité d'enregistrement et de reproduction à bande magnétique (5);
et dans lequel des signaux analogiques d'image mémorisés dans ladite unité d'enregistrement et de reproduction à bande magnétique (5) peuvent être sélectivement transmis à ladite unité d'impression (8) et audit MODEM (2).

2. Appareil de télécopie selon la revendication 1, dans lequel ledit port d'entrée de données d'image (12) peut être connecté audit moyen de codage (10) pour coder en signaux numériques de télécopie des données d'image reçues dudit port d'entrée de données d'image (12).

3. Appareil de télécopie selon l'une quelconque des revendications précédentes, dans lequel ladite unité de communication comprend en outre un moyen (14) de compression de données d'image.

4. Appareil de télécopie selon la revendication 3, dans lequel ladite unité de communication comprend en outre un moyen de dilatation de données d'image.
